# FASCICULE DE BREVET EUROPEEN

(11) **EP 0 653 614 B1**
(45) Date de publication et mention de la délivrance du brevet: **16.07.1997**
(21) Numéro de dépôt: 94402548.5
(22) Date de dépôt: 10.11.1994
(51) Int. Cl.: G01L 5/00, G21C 3/34

(54) **Dispositif de mesure de la force exercée par un ressort de grille**
Einrichtung zur Messung der von einem Bündelabstandhalter ausgeübten Kraft
Device for measuring bundle spacer spring force

(30) Priorité: 12.11.1993 FR 9313512
(43) Date de publication de la demande: 17.05.1995
(73) Titulaire: SOCIETE FRANCO-BELGE DE FABRICATION DE COMBUSTIBLES FBFC, F-92084 Paris La Défense (FR)
(72) Inventeur: Rebours, Claude, F-25520 Goux-les-Usiers (FR); Barbé, Gérard, F-92500 Rueil-Malmaison (FR)
(74) Mandataire: Fort, Jacques

(56) Documents cités:
- EP-A- 0 501 663
- DE-A- 3 242 407

## Description

La présente invention a pour objet un dispositif de mesure de la force exercée par un ressort de grille de maintien sur un crayon de combustible traversant cette grille.

Les assemblages de combustible utilisés dans les réacteurs nucléaires refroidis et modérés par de l'eau comportent des grilles de maintien des crayons combustibles, destiné à les soutenir et/ou à les maintenir aux noeuds d'un réseau régulier, en général carré. Souvent, la grille est constituée de deux jeux de plaquettes entrecroisées définissant des cellules de réception de crayon. Deux parois situées face à face d'une même cellule comportent l'une des bossages rigides d'appui du crayon, l'autre un ressort, souvent en forme d'épingle à cheveux et placé à cheval sur une plaquette, destiné à appuyer le crayon contre les bossages. Les ressorts peuvent être simples, c'est-à-dire n'avoir qu'une seule branche élastique agissant sur un crayon ; ils peuvent être doubles, c'est-à-dire avoir deux branches agissant chacune sur un crayon placé d'un côté de la plaquette qui porte le ressort.

Il est important que les forces exercées par les ressorts sur les crayons ne s'écartent pas trop d'une valeur nominale. On a déjà proposé divers dispositifs de mesure de la force exercée par un ressort simple ou double, permettant de vérifier que la force exercée par chaque ressort d'une grille est dans une plage de valeurs prédéterminées avant d'incorporer la grille dans un assemblage.

Le document EP-A-0 501 663 décrit par exemple un dispositif permettant de mesurer la force exercée par un ressort double ; ce dispositif comporte une pige destinée à être introduite à force dans une cellule, portant un palpeur de transmission de l'effort exercé par un ressort. La pige est fixée à un pion centreur qui est prévu pour s'insérer dans la cellule adjacente à celle dans laquelle est effectuée la mesure et y retenir le ressort double. L'insertion à force de la pige et du pion centreur risque d'endommager le ressort.

Le document DE-A-3 242 407 décrit un autre dispositif de mesure ayant une pige de diamètre sensiblement égal à celui d'un crayon. Un alésage est ménagé dans la pige transversalement à son axe, à un emplacement qui se trouve face au point d'appui du ressort lorsque la pige est enfoncée. Il contient un piston dont la face externe porte un élément de mesure. Pour mesurer la force d'un ressort, on insère la pige et on exerce sur le piston une pression hydraulique qui l'amène dans une position déterminée, telle que la largeur de la pige au niveau du point d'appui du ressort soit égale au diamètre nominal d'un crayon. Etant donné que le piston ne peut guère dépasser de la pige, il n'est pas possible de faire disparaître complètement les frottements lors de l'insertion et de l'enlèvement de la pige.

La présente invention vise notamment à fournir un dispositif de mesure de la force exercée par un ressort de grille sur un crayon, répondant mieux que ceux antérieurement connus aux exigences de la pratique. Elle vise notamment à réduire les forces de frottement exercées sur le ressort dont les caractéristiques sont à mesurer au cours de l'utilisation du dispositif.

Dans ce but, l'invention propose notamment un dispositif de mesure comprenant : un corps allongé relié par deux lames flexibles, parallèles au sens d'allongement, à deux poutres respectives destinées à s'insérer dans une cellule, l'une au moins des poutres portant un capteur d'effort destiné à s'appliquer contre le ressort ; un équipage coulissant dans le corps le long de ce dernier entre une position où il écarte les poutres en maintenant leur parallélisme et leur donne un écartement correspondant au diamètre nominal d'un crayon et une position où il permet aux lames flexibles de rapprocher les poutres l'une de l'autre ; et des moyens permettant de déplacer à volonté l'équipage mobile entre les deux positions.

Les moyens de déplacement de l'équipage mobile peuvent être manuels ; ils seront plus souvent motorisés. Ils peuvent notamment être à actionnement par un fluide sous pression.

L'équipage mobile peut lui aussi avoir diverses constitutions. Il peut en particulier comprendre une bielle déplaçable longitudinalement par les moyens de déplacement et reliée aux poutres par des bras de façon à constituer un parallélogramme déformable obligeant les poutres à rester parallèles à elles-mêmes au cours de leur écartement et de leur rapprochement.

Dans un autre mode de réalisation, l'équipage mobile porte au moins deux jeux de rampes coopérant avec des moyens d'appui prévus sur les poutres et constituant des cames.

Quel que soit le mode de réalisation adopté, le fait que les surfaces d'appui des poutres restent parallèles à elles-mêmes garantit un bon contact entre un capteur d'effort porté par l'une au moins des poutres et le ressort dont la force est à mesurer.

Le dispositif peut être doublé, c'est-à-dire avoir deux jeux de poutres, de façon à autoriser une mesure sur des ressorts doubles.

L'invention sera mieux comprise à la lecture de la description qui suit de modes particuliers de réalisation donnés à titre d'exemples non limitatifs. La description se réfère aux dessins qui l'accompagnent, dans lesquels :
- la figure 1 montre schématiquement un fragment d'une grille d'assemblage comportant des ressorts dont la force de pression sur un crayon est à mesurer ;
- la figure 2 montre un premier dispositif selon l'invention, en coupe suivant un plan passant par son axe ;
- la figure 3 est une vue du dispositif en coupe suivant la ligne III-III de la figure 2 ;
- la figure 4 est une vue en coupe suivant la ligne IV-IV de la figure 3 ;
- la figure 5, similaire à la figure 2, montre un autre mode de réalisation ;
- la figure 6, similaire à la figure 2, montre un dispositif de mesure dans deux cellules à la fois ; et
- la figure 7 est une vue de dessus schématique destinée à faire apparaître l'intérêt d'un dispositif double du genre montré en figure 6.

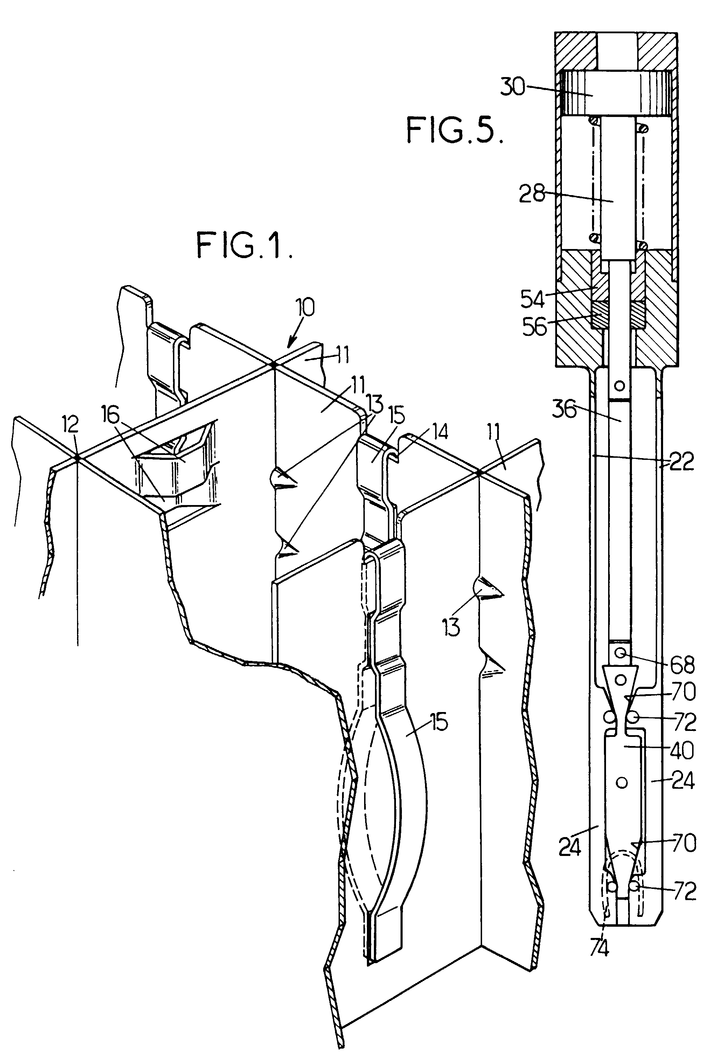

L'invention sera décrite dans son application à la mesure de la force de pression exercée par des ressorts de grille de maintien des crayons aux noeuds d'un réseau carré. Comme le montre la figure 1, une telle grille 10 peut être constituée par deux jeux de plaquettes entrecroisées 11, assemblées à mi-fer. Les plaquettes une fois engagées sont maintenues en place, par exemple par des crevés 13 et des points de soudure 12 aux croisements. Les plaquettes entrecroisées délimitent des cellules occupées pour la plupart par des crayons de combustible (non représentés) et certaines par des tubes guides appartenant au squelette de l'assemblage.

Chacune des cellules qui reçoit un crayon comporte des moyens de maintien de ces crayons dans deux directions orthogonales. En général, ces moyens comportent, pour chaque direction, des éléments d'appui rigides sur une paroi de la cellule. Dans le cas illustré, ces éléments d'appui sont constitués par des bossages 16 placés à la partie haute et la partie basse de la paroi. Les moyens de maintien comprennent de plus un ressort 15 placé en face des bossages et destiné à exercer sur le crayon une force déterminée d'appui sur le bossage. Cette force doit être suffisamment élevée pour éviter la vibration des crayons mais suffisamment faible pour que le crayon puisse glisser en cas de dilatation thermique de ce dernier.

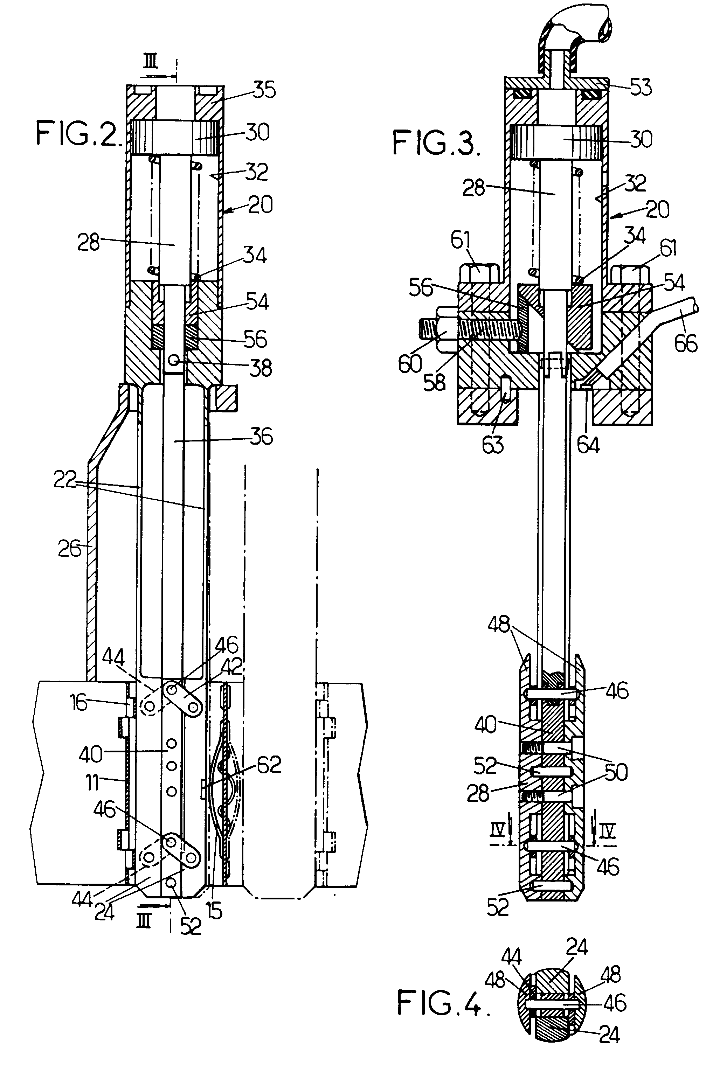

Le ressort 15 représenté en figure 1 comporte deux branches "actives", c'est-à-dire prévues chacune pour exercer une force de maintien sur un crayon. Mais le ressort peut également comporter une seule branche active, par exemple lorsqu'il est monté sur une paroi qui sépare une cellule occupée par un crayon d'une cellule destinée à être traversée par un tube guide par exemple, comme le montre la figure 2. Dans tous les cas, chaque crayon est maintenu en trois points dans une direction, en trois points également dans la direction orthogonale.

La disposition représentée jusqu'à présent est classique. On pourra en trouver des exemples de réalisation par exemple dans les documents EP-A-280 595 et US-A- 5 091 145.

Le dispositif montré schématiquement en traits pleins en figures 2 à 4 est destiné à mesurer la force de pression exercée par un ressort simple 15. Il se présente sous forme d'un corps allongé 20, de forme générale cylindrique, relié par deux lames flexibles 22 à deux poutres respectives 24 ayant une surface externe qui reproduit sensiblement une fraction de la surface d'un crayon. Les poutres ont une longueur au moins égale à la distance qui sépare les deux bossages d'appui d'une cellule. Pour garantir une mise en place précise des poutres dans la grille, le corps est avantageusement fixé sur un capot de positionnement 26, destinée à venir s'appuyer contre une grande face de la grille.

Un équipage mobile dans le sens d'allongement du corps permet de déplacer les poutres l'une par rapport à l'autre entre la position où elles sont représentées en traits pleins sur la figure 2 et la position représentée en traits mixtes. Cet équipage mobile est prévu de façon à maintenir le parallélisme des poutres au cours de ce déplacement. Dans le cas illustré sur les figures 2 et 3, l'équipage mobile est actionné par des moyens à pression de fluide. Dans un mode simplifié de réalisation, ces moyens peuvent être manuels.

Les moyens à pression de fluide représentés comprennent un piston 30 monté dans un alésage 32 ménagé dans le corps. Le piston 30 est soumis à l'action d'un ressort de rappel 34 qui tend à l'amener en appui contre le fond 35. La tige 28 du piston est attelée par un axe 38 à une bielle 36 qui s'étend entre les lames 22. La bielle 36 est articulée sur un coulisseau 40 raccordé à chaque poutre 24 par un jeu de bras 42 ou 44 constituant un parallélogramme déformable. Dans le cas illustré sur les figures 2 et 3, les bras sont montés sur le coulisseau 40 par des axes 46 qui s'engagent également dans des flasques latéraux 48. Les deux flasques sont fixés l'un à l'autre par des vis 50. Des pions 52 peuvent compléter l'immobilisation des flasques 48 l'un par rapport à l'autre.

Lorsque le piston 30 est en appui contre le fond de l'alésage dans lequel il se déplace, les bras 42 ramènent les poutres vers l'intérieur et leur donnent un encombrement tel que l'ensemble des poutres puisse être inséré sans frottement dans une cellule. Lorsqu'une pression de fluide est appliquée contre le piston, par exemple par l'intermédiaire d'un embout 53, l'équipage mobile descend et déforme le parallélogramme dans un sens qui écarte les poutres 24 l'une de l'autre.

L'écartement donné aux poutres par le piston doit correspondre à la dimension d'un crayon. Le dispositif montré à titre d'exemple en figures 2 et 3 comporte des moyens de réglage permettant d'atteindre ce résultat. Ces moyens de réglage comportent un fourreau 54 pouvant coulisser sur un tronçon de petit diamètre de la bielle 36, fixant l'amplitude d du déplacement possible du piston à partir de sa position de repos. La position longitudinale du fourreau 54, qui reçoit la pression du ressort de rappel 34, est fixée par un coin 56 déplaçable transversalement à la tige 36 à l'aide d'une vis de réglage 58 traversant le corps et pouvant être bloquée à l'aide d'un écrou 60.

Le corps 20 sera généralement en plusieurs pièces assemblées qui comportent, dans le cas des figures 2 et 3, un cylindre de réception du piston et une embase, fixés l'un à l'autre par des vis 61. Ces vis peuvent également fixer le capot 26 formant butée, indexé sur l'embase par des pions 63.

La poutre 24 destinée à venir en contact avec le ressort 15 porte un élément de mesure 62, tel qu'une jauge piézo-électrique ou une jauge de contrainte, relié par des fils non représentés à un connecteur 64 de liaison avec un câble de sortie 66.

Le fonctionnement du dispositif ressort directement de la description qui précède. Le dispositif est enfoncé, dans l'orientation convenable, dans une cellule équipée d'un ressort dont la force est à mesurer, alors que le piston n'est pas soumis à une force de pression fluide. Les poutres étant proches l'une de l'autre, l'insertion s'effectue sans frottement sensible. Le capot 26 présente une longueur telle que l'élément de mesure 62 soit en face de la partie la plus en saillie du ressort 15 lorsque l'entretoise est au contact de la grande face de la grille. On alimente alors l'embout 53, ce qui provoque la descente de la tige 28 jusqu'à ce qu'un épaulement qu'elle porte vienne en appui contre le fourreau 54, ajusté de façon que l'écartement des poutres soit alors égal au diamètre d'un crayon. La mesure est effectuée. L'embout 53 est mis à la décharge et le dispositif est retiré.

Lorsque le dispositif est destiné à mesurer la force exercée par un ressort ayant deux branches actives, tel que celui montré sur la figure 1 et, en tirets, sur la figure 2, deux ensembles lames 22 - poutres 24, simultanément actionnés par les mêmes moyens d'écartement, seront prévus, comme indiqué en traits mixtes sur la figure 2.

Les essais effectués avec un dispositif du genre ci-dessus a montré que l'ensemble des opérations nécessaires à la mesure de la force des ressorts d'une grille complète ne nécessite pas plus d'une demi-heure dans le cas d'une grille exigeant 472 mesures.

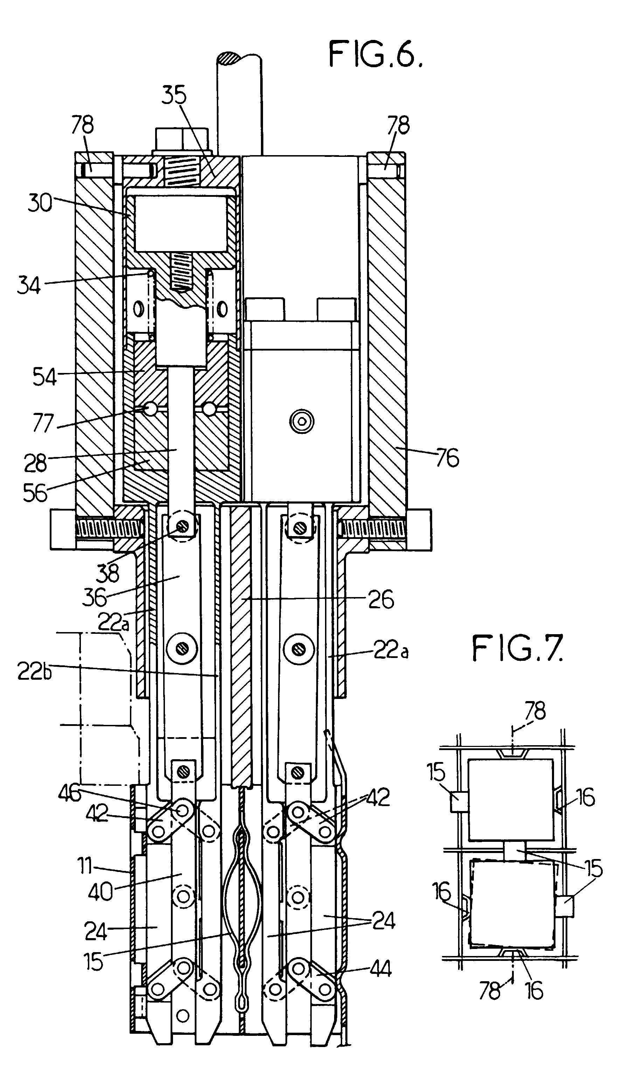

Dans la variante de réalisation montrée en figure 5, où les organes correspondant à ceux déjà décrits portent le même numéro de référence, les bras 42 et 44 constituant un parallélogramme déformable dans le cas de la figure 2 sont remplacés par des jeux de cames et rampes.

Le coulisseau 40, raccordé à la bielle 36 par une chape et un axe 68, comporte deux rampes inclinées 70 face à chaque poutre 24. Chaque poutre porte deux axes 72 constituant des cames destinées à suivre le profil des rampes. La descente des rampes à partir de la position de repos montrée en figure 5 provoque l'écartement des poutres contre l'action de moyens élastiques de rappel, constitués dans le cas illustré par un ressort à pincette 74 qui tend à rapprocher les poutres.

Comme dans le cas précédent, la descente de l'équipage mobile provoque l'écartement des poutres en les maintenant parallèles à elles-mêmes, à la seule condition que les lames élastiques 22 soient suffisamment longues pour prendre une forme en S en laissant toutes les cames en contact avec les rampes correspondantes.

Si les modes de réalisation montrés en figures 2 à 5 donnent de bons résultats dans le cas de cellules comportant deux ressorts situés face à face, ils conduisent à des écarts lorsque la dernière condition n'est pas réalisée. Dans ce cas en effet les poutres risquent de se placer en biais dans la cellule. Les figures 6 et 7 montrent une telle disposition. Dans chacune des deux cellules de la figure 7, chaque ressort 15 est placé en face d'un bossage rigide 16. Du fait de la flexion des ressorts, les poutres d'un dispositif simple risquent alors de se placer en oblique, comme indiqué par un cadre en tirets.

Ce risque est écarté avec le dispositif double montré en figure 6, où les éléments correspondant à ceux déjà décrits sont désignés par le même numéro de référence.

Le dispositif de la figure 6 peut être regardé comme ayant deux ensembles poutres-lames flexibles chacun solidaires d'un corps. Les deux corps sont portés par un boîtier commun 76 en plusieurs pièces assemblées, ayant un prolongement 26 qui constitue butée et vient s'appuyer sur une plaquette de grille, entre les deux ensembles. Le fourreau 54 peut reposer sur le coin 56 par l'intermédiaire de glissières 77 réduisant le frottement.

Chacun des ensembles est relié au boîtier 76 par un pion 78 qui constitue un axe de rotation orthogonal aux axes 38 et 46. En d'autres termes, les ensembles peuvent s'orienter autour d'un axe placé à proximité de leur extrémité haute et parallèle à la direction d'écartement des poutres. Les ensembles peuvent aussi se décaler angulairement, chacun d'un côté de la verticale, de sorte que les poutres prennent la position montrée en traits pleins sur la figure 7 et donnent une indication exacte quelle que soit la flexion des ressorts 15.

Dans le mode de réalisation illustré en figure 6, la lame externe 22a de chaque ensemble est plus épaisse que la lame interne 22b et a une flexibilité moindre. Lors de l'enfoncement du coulisseau 40, la poutre interne vient en conséquence s'appuyer sur le ressort double 15 avant que les poutres externes ne commencent à s'écarter pour venir s'appuyer sur les bossages 16. Le dispositif est dimensionné de façon que les poutres s'insèrent sans frottement dans les cellules lorsque le coulisseau est levé.

Le dispositif montré en figure 6 peut être utilisé aussi bien tel qu'il est représenté, pour mesurer la force d'un ressort double, qu'avec un seul ensemble dans le cas d'un ressort simple.

## Revendications

1. Dispositif de mesure de la force exercée, par un ressort de grille de maintien, sur un crayon de combustible traversant cette grille,
caractérisé en ce qu'il comprend : un corps allongé (20) relié par deux lames flexibles (22), parallèles au sens d'allongement, à deux poutres respectives (24) destinées à s'insérer dans une cellule, l'une au moins des poutres portant un capteur d'effort (62) destiné à s'appliquer contre le ressort ; un équipage coulissant dans le corps le long de ce dernier entre une position où il écarte les poutres en maintenant leur parallélisme et leur donne un écartement correspondant au diamètre nominal d'un crayon et une position où il permet aux lames flexibles de rapprocher les poutres l'une de l'autre ; et des moyens (34,30) permettant de déplacer à volonté l'équipage mobile entre les deux positions.

2. Dispositif suivant la revendication 1, caractérisé en ce que le dit équipage comprend une bielle (36) déplaçable longitudinalement et reliée aux poutres (24) par des bras constituant un parallélogramme déformable.

3. Dispositif selon la revendication 1, caractérisé en ce que le dit équipage comporte au moins deux jeux de rampes (70) coopérant avec des cames (72) prévues sur les poutres (24).

4. Dispositif selon l'une quelconque des revendications précédentes, caractérisé en ce que les moyens de déplacement sont munis d'éléments de réglage (54,56,58) limitant leur course et permettant de régler l'écartement des poutres pour le rendre égal au diamètre nominal d'un crayon.

5. Dispositif selon la revendication 4, caractérisé en ce que les éléments de réglage comprennent un fourreau de butée (54) déplaçable longitudinalement et limitant l'amplitude du déplacement d'un ensemble tige (28)-piston (30) appartenant à l'équipage mobile à partir d'une position de repos et un coin (56) d'appui du fourreau, permettant de régler la position longitudinale de ce dernier.

6. Dispositif selon l'une quelconque des revendications précédentes, destiné à mesurer la force exercée par un ressort double présentant des branches actives de part et d'autre d'une même paroi de cellule, caractérisé en ce qu'il comprend deux ensembles poutres-lames flexibles porté par un boîtier commun (76).

7. Dispositif selon la revendication 6, caractérisé en ce que les ensembles sont indépendamment montés sur le boîtier commun par des moyens (78) leur permettant de s'orienter autour d'un axe parallèle à la direction d'écartement des poutres.

8. Dispositif selon la revendication 6 ou 7, caractérisé en ce que, dans chaque ensemble, la lame externe (22a) a une flexibilité inférieure à celle de la lame interne (22b), qui est destinée à s'appliquer sur le ressort double.

## Patentansprüche

1. Vorrichtung zum Messen der von einer Halte-Gitterfeder auf einen Brennstab ausgeübten Kraft, der sich quer durch dieses Gitter erstreckt,
dadurch gekennzeichnet, daß sie die folgenden Merkmale aufweist: einen länglichen Körper (20), der durch zwei bewegliche Zungen (22), die zur Richtung der Längenerstreckung parallel sind, mit zwei jeweiligen Trägern (24) verbunden ist, die dazu bestimmt sind, sich in eine Zelle zu erstrekken, wobei mindestens einer der Träger einen Kraftmeßfühler (62) trägt, der dazu bestimmt ist, sich gegen die Feder anzulegen; eine Einrichtung, die im Körper längs dessen zwischen einer Lage, in der sie die Träger unter Aufrechterhaltung ihrer Parallelität auseinanderbewegt und ihnen einen Abstand verleiht, der dem Nenndurchmesser eines Brennstabes entspricht, und einer Lage verschieblich ist, in der sie es den flexiblen Zungen gestattet, die Träger aneinander anzunähern; und Mittel (34, 30), die es gestatten, wahlweise die bewegliche Einrichtung zwischen den beiden Lagen zu versetzen.

2. Vorrichtung nach Anspruch 1, dadurch gekennzeichnet, daß die genannte Einrichtung eine Verbindungsstange (36) aufweist, die in Längsrichtung versetzbar ist und mit den Trägern (24) durch Arme verbunden ist, die ein verformbares Parallelogramm bilden.

3. Vorrichtung nach Anspruch 1, dadurch gekennzeichnet, daß die genannte Einrichtung mindestens zwei Sätze von Rampen (70) aufweist, die mit Nocken (72) zusammenwirken, die an den Trägern (24) vorgesehen sind.

4. Vorrichtung nach irgendeinem der vorangehenden Ansprüche, dadurch gekennzeichnet, daß die Mittel zum Versetzen mit Einstellelementen (54, 56, 58) versehen sind, die ihren Bewegungsweg begrenzen und es gestatten, den Abstand der Träger einzustellen, um ihn an den Nenndurchmesser eines Brennstabes anzugleichen.

5. Vorrichtung nach Anspruch 4, dadurch gekennzeichnet, daß die Einstellelemente eine Anschlaghülse (54) aufweisen, die in Längsrichtung versetzbar ist und die Amplitude der Versetzung einer Anordnung aus einer Stange (28) und einem Kolben (30) begrenzt, die zur Einrichtung gehört, die aus einer Ruhelage heraus beweglich ist, sowie einen Anschlagkörper (56) für die Hülse, der es gestattet, deren Längsposition einzustellen.

6. Vorrichtung nach irgendeinem der vorangehenden Ansprüche, die dazu bestimmt ist, die Kraft zu messen, die von einer Doppelfeder ausgeübt wird, die wirksame Arme beiderseits ein und derselben Zellenwand aufweist, dadurch gekennzeichnet, daß sie zwei Anordnungen aus Trägern und flexiblen Zungen aufweist, die von einem gemeinsamen Gehäuse (76) getragen sind.

7. Vorrichung nach Anspruch 6, dadurch gekennzeichnet, daß die beiden Anordnungen unabhängig am gemeinsamen Gehäuse durch Mittel (78) angebracht sind, die ihre Ausrichtung rund um eine Achse gestatten, die parallel zur Richtung des Abstandes der Träger verläuft.

8. Vorrichtung nach Anspruch 6 oder 7, dadurch gekennzeichnet, daß in jeder Anordnung die äußere Zunge (22a) eine Flexibilität aufweist, die kleiner ist als die der inneren Zunge (22b), die dazu bestimmt ist, sich gegen die doppelte Feder anzulegen.

## Claims

1. A device for measuring the force exerted by a spring of a supporting grid on a fuel rod passing through the grid,
characterized in that it comprises: an elongate body (20) connected by two flexible blades (22) that are parallel to the longer direction, to two respective beams (24) designed to be inserted in a cell, at least one of the beams carrying a force sensor (62) designed to be pressed against the spring; equipment slidable in the body along the body between a position in which it spreads the beams apart while keeping them parallel to give them a spacing that corresponds to a nominal diameter of a fuel rod, and a position in which it allows the flexible blades to move the beams towards each other; and displacement means (34, 30) for moving the movable equipment at will between the two positions.

2. A device according to claim 1, characterized in that said equipment comprises a longitudinally displaceable connecting rod (36) connected to the beams (24) by arms that make up a deformable parallelogram.

3. A device according to claim 1, characterized in that said equipment comprises at least two sets of ramps (70) co-operating with cams (72) provided on the beams (24).

4. A device according to any preceding claim, characterized in that the displacement means are provided with adjustment elements (54, 56, 58) for limiting their stroke and enabling the separation of the beams to be adjusted so as to be equal to the nominal diameter of a fuel rod.

5. A device according to claim 4, characterized in that the adjustment elements comprise a stop-forming bush (54) that is longitudinally displaceable and that limits the amplitude of displacement away from a rest position of an assembly belonging to the moving equipment and comprising a piston (30) and a piston rod (28), and wedge (56) for bearing against the bush and enabling the longitudinal position thereof to be adjusted.

6. A device according to any preceding claim, for measuring the force exerted by a double spring having an active branch on either side of a common cell wall, characterized in that it comprises two beam-and-flexible blade assemblies carried by a common housing (76).

7. A device according to claim 6, characterized in that the assemblies are independently mounted on the common housing by means (78) enabling them to pivot about an axis parallel to the direction in which the beams are separated.

8. A device according to claim 6 or 7, characterized in that the outer blade (22a) in each assembly is less flexible than the inner blade (22b) thereof, which inner blade is designed to bear against the double spring.
